# EUROPEAN PATENT APPLICATION

(11) **EP 4 382 792 A1**
(43) Date of publication of application: **12.06.2024**
(21) Application number: 22864688.1
(22) Date of filing: 01.09.2022
(51) Int. Cl.: F16L 21/04, F16L 21/08

(54) **PUSH RING, PIPE JOINT, AND METHOD FOR JOINING PIPES**

(30) Priority: 03.09.2021 JP 2021143577
(71) Applicant: Kubota Corporation, Osaka-shi, Osaka 556-8601 (JP)
(72) Inventor: TANAKA Ryunosuke, Amagasaki-shi, Hyogo 660-0095 (JP); KOMARU Yuito, Amagasaki-shi, Hyogo 660-0095 (JP); ODA Keita, Amagasaki-shi, Hyogo 660-0095 (JP)
(74) Representative: Canzler & Bergmeier Patentanwälte Partnerschaft mbB
(86) International application number: PCT/JP2022/032945
(87) International publication number: WO 2023/033106

(57) **Abstract**

A gland 14 is fit onto a spigot so as to face the opening end face of a socket from the outside and is coupled to the socket with a plurality of fasteners so as to press a seal member into the socket, wherein the gland has a pressing face for pressing the seal member, a plurality of fastener insertion holes 21 where the fasteners are inserted, an equal interval region 29 in which intervals between the fastener insertion holes 21 in a circumferential direction A are kept at equal intervals S1, and an extended interval region 30 in which an interval S2 between any adjacent two of the fastener insertion holes 21 is larger than the equal intervals S1, and the extended interval region 30 includes a reinforcing member 23.

## Description

### Technical Field

The present invention relates to a gland used for a pipe joint having a socket and a spigot, the pipe joint provided with the gland, and a method for joining pipes using the gland.

### Background Art

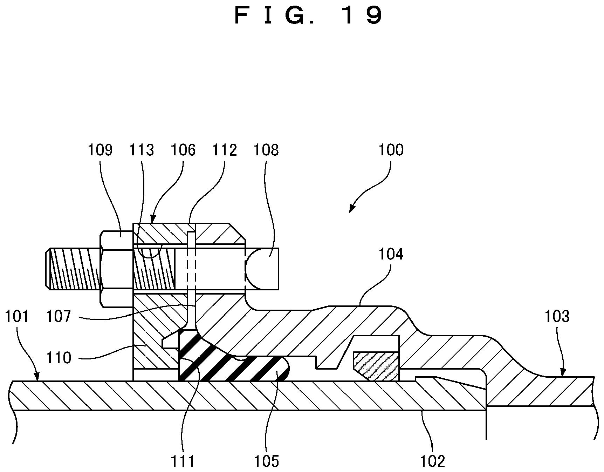

Conventionally, for example, such a pipe joint has a first pipe 101 with a spigot 102 inserted into a socket 104 of a second pipe 103 as illustrated in FIG. 19. A seal member 105 is inserted between the outer circumference of the spigot 102 and the inner circumference of the socket 104. A gland 106 is fit onto the spigot 102 and faces an opening end face 107 of the socket 104 from the outside. The gland 106 is coupled to the socket 104 with a plurality of bolts 108 and nuts 109.

The gland 106 includes an annular body part 110, a pressing face 111 that comes into contact with the seal member 105 to press the seal member 105, a plurality of protruding portions 112 that comes into contact with the opening end face 107 of the socket 104, and a plurality of bolt insertion holes 113 where the bolts 108 are inserted.

The pressing face 111 and the protruding portions 112 are provided on one side (that is, one side facing the socket 104) of the gland 106. The protruding portions 112 in contact with the opening end face 107 of the socket 104 keep a predetermined distance from the pressing face 111 to the opening end face 107 of the socket 104.

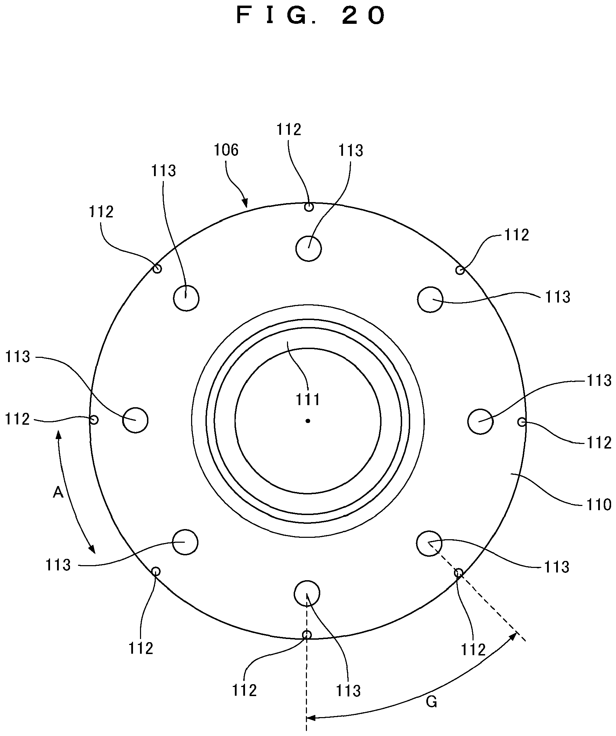

As illustrated in FIG. 20, intervals G between the bolt insertion holes 113 in a circumferential direction A of the gland 106 are all kept at equal intervals. The bolts 108 are inserted into the bolt insertion holes 113 of the gland 106, and then the bolts 108 and the nuts 109 are tightened. Thus, the pressing face 111 of the gland 106 comes into contact with the seal member 105 to press in the seal member 105 between the outer circumference of the spigot 102 and the inner circumference of the socket 104.

See Japanese Patent Laid-Open No. 2014-5868 for a description on the gland 106 and a pipe joint 100.

### Summary of Invention

### Technical Problem

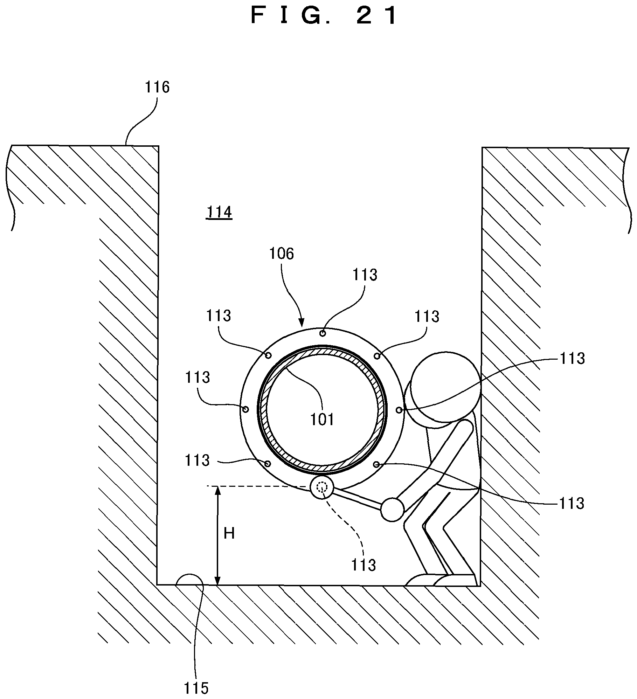

In the conventional form, for example, a groove 114 may be formed on a ground 116 as illustrated in FIG. 21. The first pipe 101 and the second pipe 103 may be joined to each other in the groove 114.

At this point, because of a small distance H between the bolt insertion hole 113 located directly below the first pipe 101 and a bottom 115 of the groove 114, it is difficult to insert the bolt 108 into the bolt insertion hole 113 located directly below the first pipe 101 and tighten the nut 109. This leads to low workability when the first pipe 101 and the second pipe 103 are joined to each other. To address the problem, the distance H between the bolt insertion hole 113 located directly below the first pipe 101 and the bottom 115 of the groove 114 needs to be extended, requiring a large work area.

In addition to the joining of the first pipe 101 and the second pipe 103 in the groove 114, for example, the formation of a pipe line by joining the first pipe 101 and the second pipe 103 along an obstacle, e.g., a wall may also have a small distance between the obstacle and the bolt insertion hole 113 located near the obstacle. Hence, it is difficult to insert the bolt 108 into the bolt insertion hole 113 located near the obstacle and tighten the nut 109, resulting in low workability when the pipes 101 and 103 are joined to each other. For this reason, a large distance is necessary between the bolt insertion hole 113 located near the obstacle and the obstacle, requiring a large work area.

An object of the present invention is to provide a gland, a pipe joint, and a method for joining pipes, by which the pipes are joined to each other with high workability even if a work area between the gland and an obstacle is small.

### Solution to Problem

A gland according to the present invention is provided for a pipe joint in which a spigot is inserted into a socket, and
a seal member is inserted between the outer circumference of the spigot and the inner circumference of the socket,
wherein the gland is fit onto the spigot so as to face the opening end face of the socket from the outside and is coupled to the socket with a plurality of fasteners so as to press the seal member into the socket,
the gland has a pressing face for pressing the seal member, a plurality of fastener insertion holes where the fasteners are inserted, an equal interval region in which intervals between the fastener insertion holes in a circumferential direction are kept at equal intervals, and an extended interval region in which an interval between any adjacent two of the fastener insertion holes is larger than the equal intervals, and
the extended interval region includes a reinforcing member.

With this configuration, in the presence of an obstacle that interferes with a joining operation for the pipes to each other, the spigot is inserted into the socket, and then the fasteners are inserted into the fastener insertion holes and are tightened therein in a state in which the extended interval region of the gland faces the obstacle. Thus, the gland is coupled to the socket, and the seal member is inserted between the outer circumference of the spigot and the inner circumference of the socket.

In the joining operation of the pipes, the extended interval region of the gland faces an obstacle, so that the fastener insertion holes of the extended interval region are located at positions separated from a position closest to the obstacle in the circumferential direction. Thus, the interval between the fastener insertion holes of the extended interval region and the obstacle is large, achieving high workability even in a small work area between the gland and the obstacle when the pipes are joined to each other.

The extended interval region of the gland is kept sufficiently rigid by the reinforcing member. Thus, even if a reaction force of the seal member is applied to the gland, the extended interval region of the gland can be prevented from being deflected by the reaction force.

According to the gland of the present invention, the extended interval region preferably faces an obstacle that interferes with a joining operation for the pipes to each other.

According to the gland of the present invention, the reinforcing member is provided on the side opposite to the pressing face, protrudes from the side opposite to the pressing face in a separating direction that separates the spigot from the socket, and is located outside the inner circumference of the gland in a radial direction, and a step portion is formed between the inner circumference of the gland and the inner circumference of the reinforcing member.

With this configuration, if the first pipe is deflected relative to the second pipe due to earthquakes or the like after the spigot of the first pipe is inserted into the socket of the second pipe to join the first pipe to the second pipe, an angle of deflection before the first pipe comes into contact with the reinforcing member is larger than an angle of deflection when the inner circumference of the reinforcing member is located at the same position as the inner circumference of the gland in a radial direction. This reduces a load applied to the gland when the first pipe is deflected relative to the second pipe.

When the plurality of fasteners are inserted into the plurality of fastener insertion holes to couple the gland to the socket, even if the gland tilts relative to the first pipe due to sequential tightening performed on the fasteners, a tilt angle before the reinforcing member of the gland comes into contact with the first pipe is larger than a tilt angle when the inner circumference of the reinforcing member is located at the same position as the inner circumference of the gland in the radial direction. This facilitates the operations of sequential tightening on the plurality of fasteners and coupling of the gland to the socket.

According to the gland of the present invention, it is preferable that the reinforcing member is provided on the side opposite to the pressing face, protrudes from the side opposite to the pressing face in a separating direction that separates the spigot from the socket, and is located outside the inner circumference of the gland in a radial direction, and
a tapering portion is formed between the inner circumference of the gland and the inner circumference of the reinforcing member, and
the tapering portion tilts outward in the radial direction as the tapering portion extends in the separating direction that separates the spigot from the socket.

With this configuration, if the first pipe is deflected relative to the second pipe due to earthquakes or the like after the spigot of the first pipe is inserted into the socket of the second pipe to join the first pipe to the second pipe, an angle of deflection before the first pipe comes into contact with the reinforcing member of the gland is larger than an angle of deflection when the inner circumference of the reinforcing member is located at the same position as the inner circumference of the gland in the radial direction. This reduces a load applied to the gland when the first pipe is deflected relative to the second pipe.

Moreover, when the plurality of fasteners are inserted into the plurality of fastener insertion holes to couple the gland to the socket, even if the gland tilts relative to the first pipe due to sequential tightening performed on the fasteners, a tilt angle before the reinforcing member of the gland comes into contact with the first pipe is larger than a tilt angle when the inner circumference of the reinforcing member is located at the same position as the inner circumference of the gland in the radial direction. This facilitates the operations of sequential tightening on the plurality of fasteners and coupling of the gland to the socket.

According to the gland of the present invention, the reinforcing member is provided between the two adjacent fastener insertion holes in the extended interval region.

With this configuration, sufficient rigidity is kept between the two fastener insertion holes in the extended interval region by the reinforcing member. Thus, even if a large load is generated between the two fastener insertion holes in the extended interval region when the fasteners are inserted into the fastener insertion holes of the extended interval region and are tightened therein, the extended interval region of the gland can be prevented from being deformed or damaged.

A pipe joint including the gland of the present invention, wherein
a spigot is inserted into a socket,
a seal member is inserted between the outer circumference of the spigot and the inner circumference of the socket,
the gland is fit onto the spigot so as to face the opening end face of the socket from the outside and is coupled to the socket with a plurality of fasteners while an extended interval region faces an obstacle that interferes with a joining operation of the pipes,
the gland has a pressing surface in contact with the seal member, and
the fasteners are inserted into the fastener insertion holes of the gland.

A method for joining pipes using the gland of the present invention,
wherein the spigot is inserted into the socket, and the gland is coupled to the socket and the seal member is inserted between the outer circumference of the spigot and the inner circumference of the socket by inserting the fasteners into the fastener insertion holes of the gland and tightening the fasteners in a state in which the extended interval region of the gland faces an obstacle that interferes with a joining operation of the pipes.

According to the method for joining the pipes of the present invention, it is preferable that the spigot is inserted into the socket, and the gland is coupled to the socket by inserting the fasteners into the fastener insertion holes of the gland and tightening the fasteners in a state in which the spigot is diagonally deflected relative to the socket.

### Advantageous Effect of Invention

According to the present invention, the pipes are joined to each other with high workability even if a work area between the gland and an obstacle is small. Furthermore, the extended interval region of the gland is kept sufficiently rigid by the reinforcing member. Thus, even if a reaction force of the seal member is applied to the gland, the extended interval region of the gland can be prevented from being deflected by the reaction force.

### Brief Description of Drawings

[FIG. 1] FIG. 1 is a cross-sectional view of a pipe joint according to a first embodiment of the present invention.
[FIG. 2] FIG. 2 is a front view illustrating the socket of the pipe joint.
[FIG. 3] FIG. 3 is a front view illustrating the gland of the pipe joint.
[FIG. 4] FIG. 4 is a rear view illustrating the gland of the pipe joint.
[FIG. 5] FIG. 5 is a cross-sectional view taken along line X-X of FIG. 3.
[FIG. 6] FIG. 6 is a cross-sectional view taken along line Y-Y of FIG. 3.
[FIG. 7] FIG. 7 is a cross-sectional view taken along line Z-Z of FIG. 3.
[FIG. 8] FIG. 8 is a perspective view illustrating the front side of the gland of the pipe joint.
[FIG. 9] FIG. 9 is a perspective view illustrating the back side of the gland of the pipe joint.
[FIG. 10] FIG. 10 is a schematic diagram illustrating a joining operation of joining pipes using the pipe joint in a groove formed on the ground.
[FIG. 11] FIG. 11 is a cross-sectional view of the pipe joint illustrating when a first pipe is deflected relative to a second pipe after the pipes are joined.
[FIG. 12] FIG. 12 is an enlarged view of a part of the cross-sectional view of the pipe joint in FIG. 11.
[FIG. 13] FIG. 13 is a cross-sectional view of the pipe joint illustrating when the gland is coupled to the socket by performing sequential tightening when the pipes are joined to each other.
[FIG. 14] FIG. 14 is an enlarged view of a part of the cross-sectional view of the pipe joint in FIG. 13.
[FIG. 15] FIG. 15 is a cross-sectional view of a pipe joint according to a second embodiment of the present invention.
[FIG. 16] FIG. 16 is a schematic diagram illustrating a state of a joining operation of joining pipes using the pipe joint of standpipes vertically provided along the wall of a building according to a third embodiment of the present invention.
[FIG. 17] FIG. 17 is a cross-sectional view illustrating a method for joining pipes according to a fourth embodiment of the present invention, in which a gland is coupled to a socket with a spigot deflected relative to the socket.
[FIG. 18] FIG. 18 is an enlarged view of a part of the cross-sectional view of FIG. 17.
[FIG. 19] FIG. 19 is a cross-sectional view of a pipe joint including a conventional gland.
[FIG. 20] FIG. 20 is a front view of the gland.
[FIG. 21] FIG. 21 is a schematic diagram illustrating a state of joining of pipes using the conventional pipe joint in a groove formed on the ground.

### Description of Embodiments

Embodiments of the present invention will be described below with reference to the accompanying drawings.

### (First Embodiment)

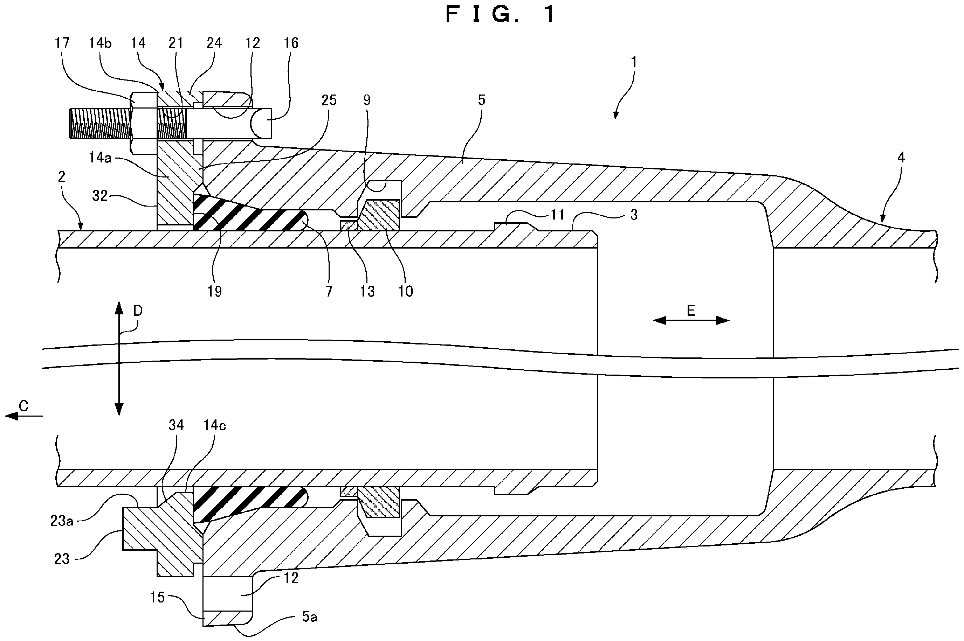

In a first embodiment, as illustrated in FIG. 1, a pipe joint 1 includes a cast-iron first pipe 2 and a cast-iron second pipe 4 that are joined to each other. A spigot 3 provided on one end of the first pipe 2 is inserted into a socket 5 provided on one end of the second pipe 4. An annular rubber ring 7 (an example of a seal member) is inserted between the outer circumference of the spigot 3 and the inner circumference of the socket 5.

A lock ring groove 9 located deeper than the rubber ring 7 in the socket 5 is formed over the inner circumference of the socket 5. In the lock ring groove 9, a single-split lock ring 10 is provided in the circumferential direction.

The spigot 3 has a protruding portion 11 that is formed around the outer circumference of the distal end of the spigot 3 so as to be engaged with the lock ring 10 from the back side of the socket 5.

A single-split backup ring 13 is fit onto the spigot 3 in the circumferential direction and is adjacent to the lock ring 10.

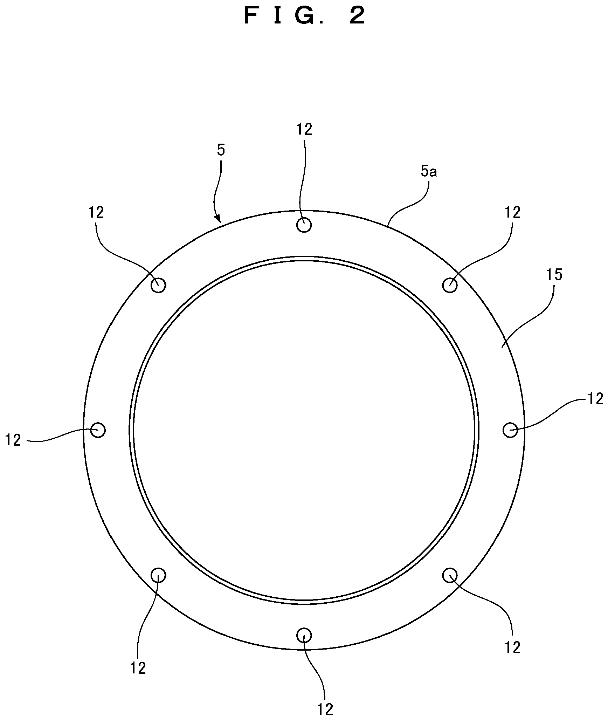

The socket 5 has a flange part 5a at the distal end. On the flange part 5a, a plurality of bolt holes 12 are formed. For example, in FIG. 2, the eight bolt holes 12 are formed on the flange part 5a. The first pipe 2 and the second pipe 4 are provided in the horizontal direction, and two of the bolt holes 12 are located on a vertical line.

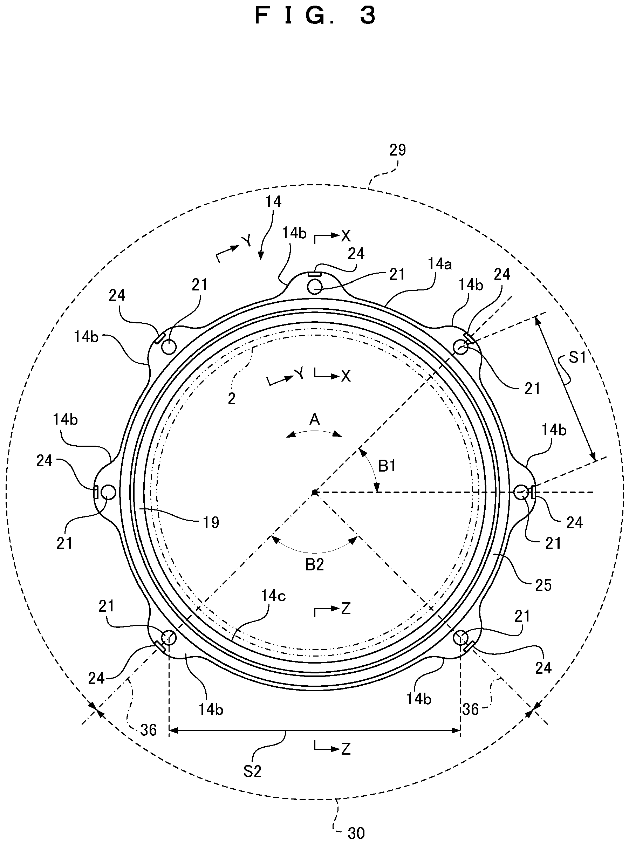

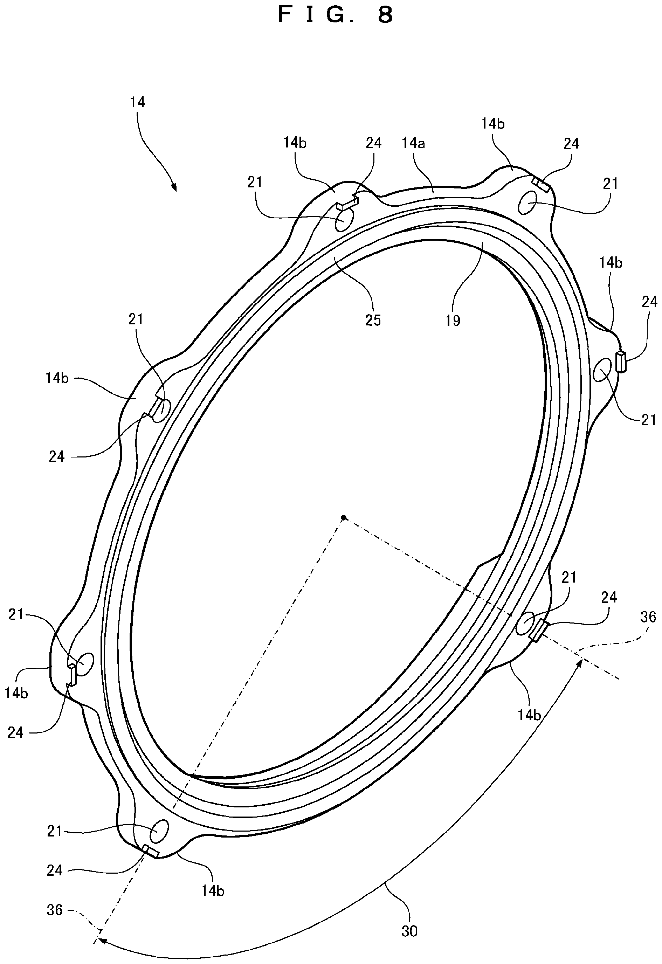

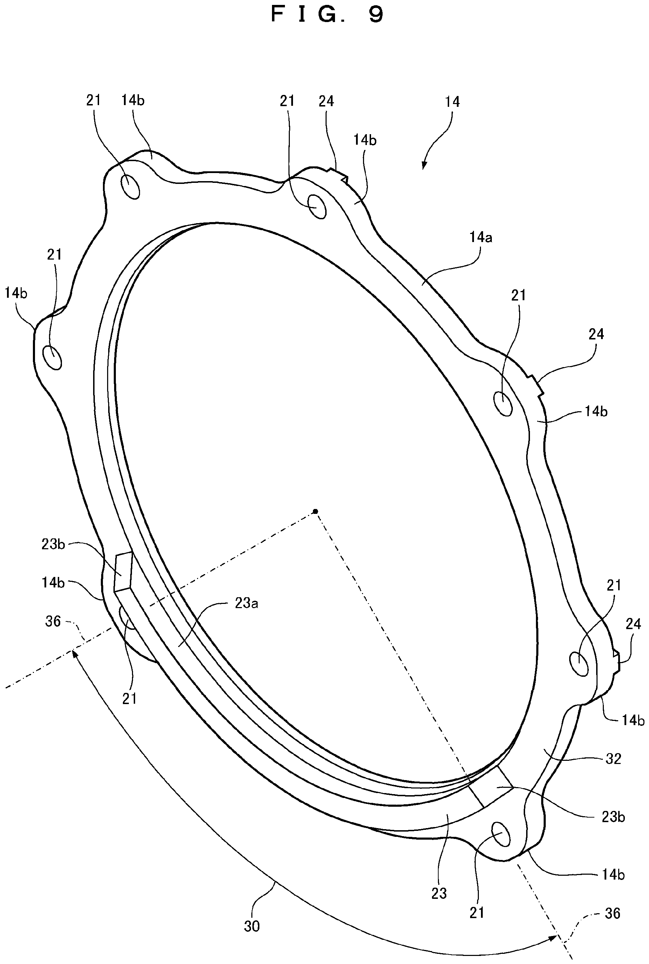

A gland 14 for pressing the rubber ring 7 into the socket 5 is fit onto the spigot 3 and faces an opening end face 15 of the socket 5 from the outside. The gland 14 has an annular body part 14a that is coupled to the socket 5 with a plurality of (e.g., seven) T bolts 16 (an example of a fastener) and nuts 17 (an example of a fastener). As illustrated in FIGS. 3 to 9, the body part 14a has a plurality of protruding portions 14b that radially protrude outward around the outer circumference of the body part 14a.

The body part 14a is provided with a pressing face 19 that presses the rubber ring 7, a plurality of bolt insertion holes 21 (an example of a fastener insertion hole) where the T bolts 16 are inserted, a reinforcing member 23, first projecting portions 24, and a second projecting portion 25. The protruding portions 14b of the body part 14a are formed in alignment with the bolt insertion holes 21.

The gland 14 has an equal interval region 29 and an extended interval region 30. In the equal interval region 29, intervals between the bolt insertion holes 21 in a circumferential direction A are kept at equal intervals S1. In the extended interval region 30, an interval S2 between any adjacent two of the bolt insertion holes 21 is larger than the equal intervals S1.

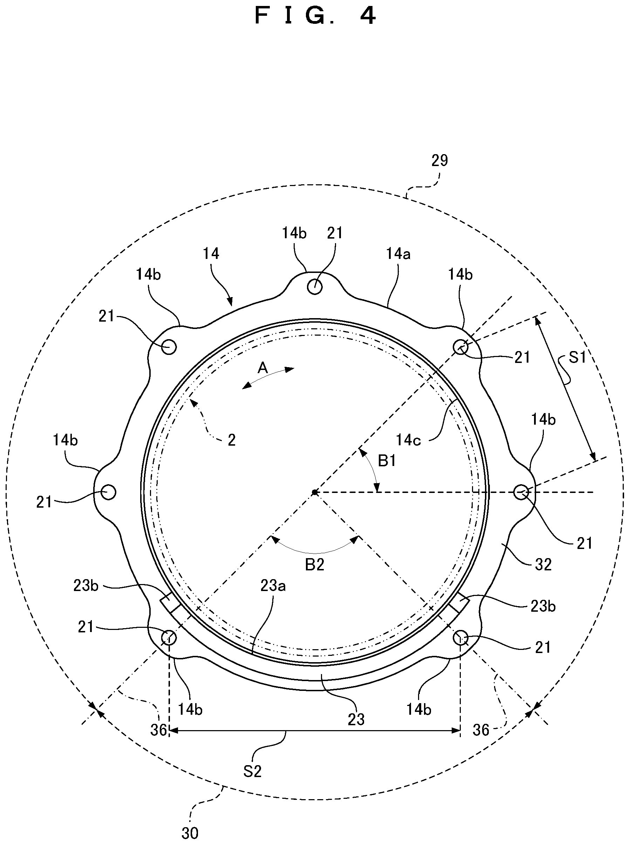

For example, in FIGS. 3 and 4, the seven bolt insertion holes 21 are formed on the body part 14a. An angle of index B1 of the bolt insertion holes 21 is 45° in the equal interval region 29. An angle of index B2 of the bolt insertion holes 21 is 90° in the extended interval region 30.

The reinforcing member 23 is an arc-shaped member provided on a face 32 on the side opposite to the pressing face 19. The reinforcing member 23 protrudes from the face 32 in a separating direction C. The separating direction C is a direction that separates the spigot 3 from the socket 5. The reinforcing member 23 is provided between the two adjacent bolt insertion holes 21 in the extended interval region 30. The reinforcing member 23 is located outside an inner circumference 14c of the gland 14 in a radial direction D.

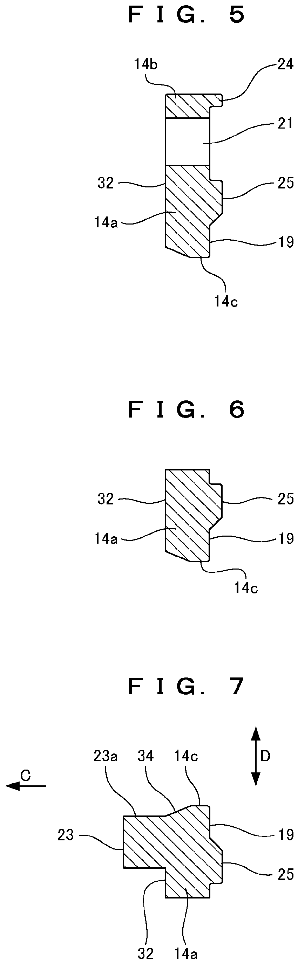

As illustrated in FIGS. 1 and 7, a tapering portion 34 is formed between the inner circumference 14c of the gland 14 and an inner circumference 23a of the reinforcing member 23 so as to extend along the length of the reinforcing member 23. The tapering portion 34 tilts outward in the radial direction D as the tapering portion 34 extends in the separating direction C that separates the spigot 3 from the socket 5.

As illustrated in FIG. 4, from the inside of the extended interval region 30, both end portions 23b of the reinforcing member 23 extend beyond two straight lines 36, which radially connect the center of the gland 14 and the centers of both of the bolt insertion holes 21 of the extended interval region 30, and are located in the equal interval region 29.

The first projecting portions 24 and the second projecting portion 25 are each brought into contact with the opening end face 15 of the socket 5. In this configuration, the first projecting portions 24 are located outside the bolt insertion holes 21 in the radial direction D of the gland 14. The second projecting portion 25 is located inside the bolt insertion holes 21 in the radial direction D of the gland 14 and is annularly formed around the pressing face 19. As illustrated in FIG. 1, one end of the rubber ring 7 is fit into the second projecting portion 25 of the gland 14 and comes into contact with the pressing face 19.

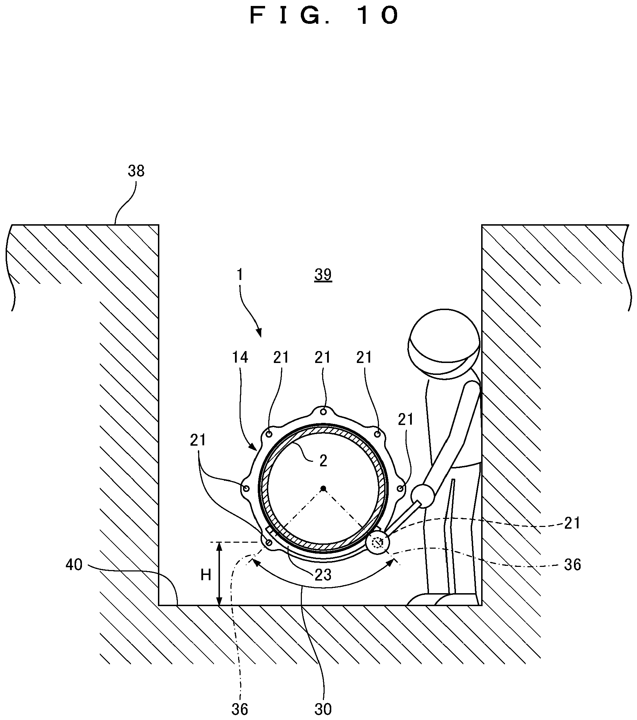

As illustrated in FIGS. 1, 3, and 4, the gland 14 is coupled to the socket 5 such that the extended interval region 30 is located directly below the first pipe 2. As illustrated in FIG. 10, the first pipe 2 and the second pipe 4 are joined to each other in a groove 39 that is formed by digging a ground 38. At this point, a bottom 40 of the groove 39 serves as an obstacle that interferes with a joining operation of the first pipe 2 and the second pipe 4. Specifically, the gland 14 is coupled to the socket 5 with the plurality of T bolts 16 and nuts 17 such that the extended interval region 30 faces the bottom 40 (an example of an obstacle) of the groove 39.

A method for joining the first pipe 2 and the second pipe 4 with the gland 14 will be described below.

First, the gland 14, the rubber ring 7, and the backup ring 13 are fit onto the spigot 3 of the first pipe 2. Thereafter, the lock ring 10 is attached into the lock ring groove 9 of the socket 5 of the second pipe 4 that has been placed in the groove 39, and then the lock ring 10 is increased in diameter by using a diameter extending device (not illustrated).

Thereafter, in the groove 39, the spigot 3 of the first pipe 2 is inserted into the socket 5 of the second pipe 4. At this point, the lock ring 10 increased in diameter allows the protruding portion 11 of the spigot 3 to pass the inner circumference of the lock ring 10 into the socket 5.

The diameter extending device (not illustrated) is then removed, so that the lock ring 10 is reduced in diameter and is placed around the outer circumference of the spigot 3.

Subsequently, the backup ring 13 is moved in a pipe axis direction E and is inserted into the socket 5, so that the backup ring 13 is placed next to the lock ring 10. Furthermore, the rubber ring 7 is moved in the pipe axis direction E and is placed at the front of the opening end face 15 of the socket 5.

Thereafter, as illustrated in FIG. 10, the T bolt 16 is inserted into the bolt hole 12 of the socket 5 and the bolt insertion hole 21 of the gland 14 in a state in which the extended interval region 30 of the gland 14 is located directly below the first pipe 2. The nut 17 is then screwed onto the T bolt 16, and then the nut 17 is tightened until the first projecting portion 24 and the second projecting portion 25 of the gland 14 come into contact with the opening end face 15 of the socket 5.

Thus, as illustrated in FIG. 1, the gland 14 is coupled to the socket 5, and the pressing face 19 of the gland 14 presses in the rubber ring 7 between the outer circumference of the spigot 3 and the inner circumference of the socket 5, so that the first pipe 2 is joined to the second pipe 4.

According to the method for joining the pipes 2 and 4, as illustrated in FIGS. 3, 4, and 10, the extended interval region 30 of the gland 14 is located directly below the first pipe 2. Thus, the bolt insertion holes 21 of the extended interval region 30 are not present directly below the first pipe 2 but are located at positions separated from a position directly below the first pipe 2 in the circumferential direction A of the gland 14. Thus, the distance H between the bolt insertion holes 21 of the extended interval region 30 and the bottom 40 of the groove 39 is large, achieving high workability even in a small work area between the gland 14 and the bottom 40 of the groove 39 when the first pipe 2 and the second pipe 4 are joined to each other.

The extended interval region 30 of the gland 14 is kept sufficiently rigid by the reinforcing member 23. Thus, even if a reaction force of the rubber ring 7 is applied to the gland 14, the extended interval region 30 of the gland 14 can be prevented from being deflected by the reaction force. Furthermore, since the reinforcing member 23 is provided, even if a large load is generated between the two bolt insertion holes 21 in the extended interval region 30 when the T bolts 16 are inserted into the bolt insertion holes 21 of the extended interval region 30 of the gland 14 and the bolt holes 12 of the socket 5 and are tightened with the nuts 17, the extended interval region 30 can be prevented from being deformed or damaged.

As illustrated in FIG. 7, the reinforcing member 23 is located outside the inner circumference 14c of the gland 14 in the radial direction D, and the tapering portion 34 is formed between the inner circumference 14c of the gland 14 and the inner circumference 23a of the reinforcing member 23. Thus, after the first pipe 2 and the second pipe 4 are joined to each other in the aforementioned manner, when the first pipe 2 is deflected relative to the second pipe 4 due to earthquakes or the like, an angle of deflection α before the first pipe 2 comes into contact with the reinforcing member 23 of the gland 14 is larger than an angle of deflection when the inner circumference 23a of the reinforcing member 23 is located at the same position as the inner circumference 14c of the gland 14 in the radial direction D. This reduces a load applied to the gland 14 when the first pipe 2 is deflected relative to the second pipe 4.

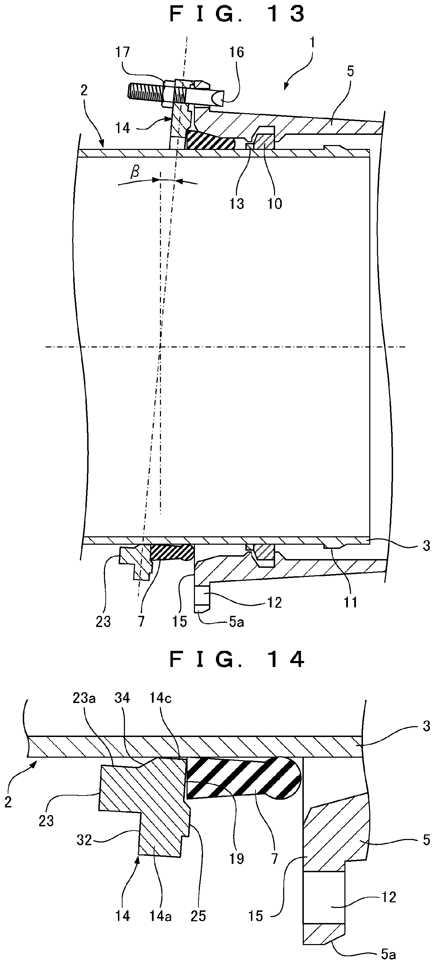

In the method for joining the first pipe 2 and the second pipe 4, when the T bolts 16 are inserted into the bolt holes 12 of the socket 5 and the bolt insertion holes 21 of the gland 14 to couple the gland 14 to the socket 5, as illustrated in FIG. 13, so-called "sequential tightening" may be performed, that is, the T bolt 16 at the uppermost position and the nut 17 are tightened first, and then the T bolts 16 at lower positions and the nuts 17 are sequentially tightened. As described above, sequential tightening is performed on the T bolts 16 and the nuts 17, so that even if the gland 14 tilts relative to the first pipe 2, a tilt angle β before the reinforcing member 23 of the gland 14 comes into contact with the first pipe 2 is larger than a tilt angle when the inner circumference 23a of the reinforcing member 23 is located at the same position as the inner circumference 14c of the gland 14 in the radial direction D. This facilitates the operations of sequential tightening on the T bolts 16 and the nuts 17 and coupling between the gland 14 to the socket 5.

### (Second Embodiment)

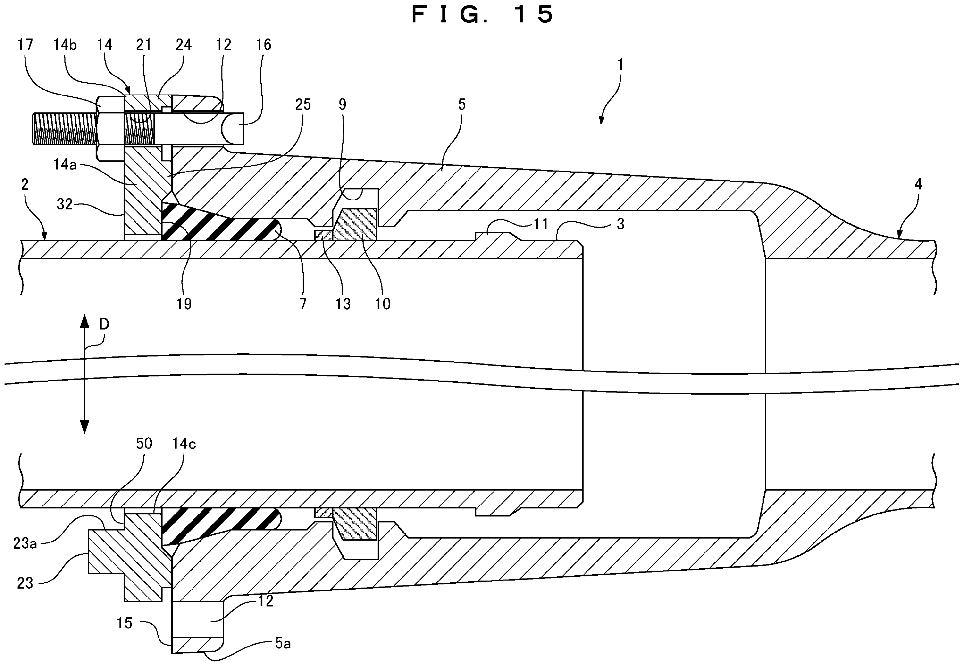

In a second embodiment, as illustrated in FIG. 15, a reinforcing member 23 is located outside an inner circumference 14c of a gland 14 in a radial direction D. A step portion 50 is formed between the inner circumference 14c of the gland 14 and an inner circumference 23a of the reinforcing member 23 so as to extend along the length of the reinforcing member 23. The step portion 50 has a step face parallel to the radial direction D.

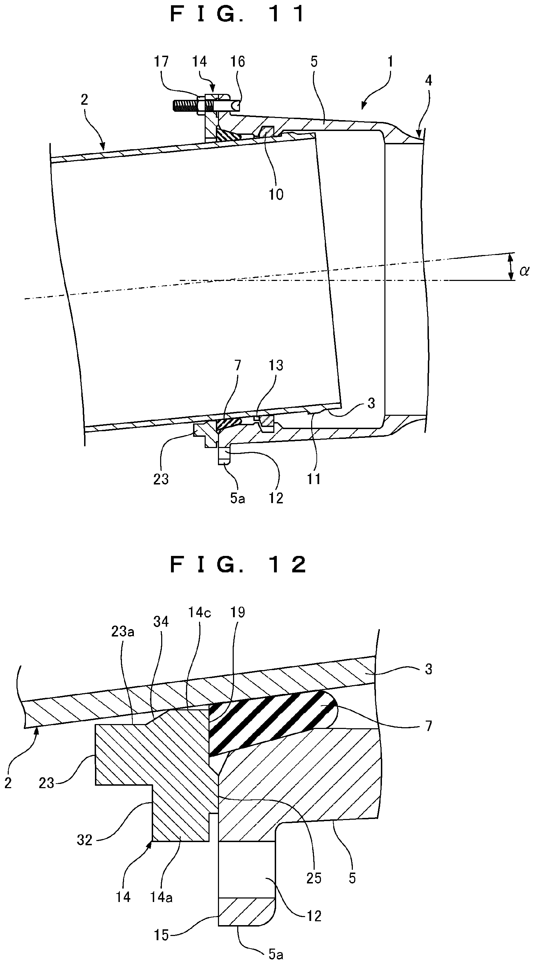

With this configuration, as in the first embodiment, if a first pipe 2 is deflected relative to a second pipe 4 due to earthquakes or the like after the first pipe 2 and the second pipe 4 are joined to each other, an angle of deflection α (see FIG. 11) before the first pipe 2 comes into contact with the reinforcing member 23 of the gland 14 is larger than an angle of deflection when the inner circumference 23a of the reinforcing member 23 is located at the same position as the inner circumference 14c of the gland 14 in the radial direction D.

Moreover, in a method for joining the first pipe 2 and the second pipe 4, when T bolts 16 are inserted into bolt holes 12 of a socket 5 and bolt insertion holes 21 of the gland 14 to couple the gland 14 to the socket 5, even if the gland 14 tilts relative to the first pipe 2 due to sequential tightening performed on the T bolts 16 and nuts 17, a tilt angle β (see FIG. 13) before the reinforcing member 23 of the gland 14 comes into contact with the first pipe 2 is larger than a tilt angle when the inner circumference 23a of the reinforcing member 23 is located at the same position as the inner circumference 14c of the gland 14 in the radial direction D.

### (Third Embodiment)

In the first embodiment, as illustrated in FIG. 10, the bottom 40 of the groove 39 serves as an obstacle that interferes with a joining operation of the first pipe 2 and the second pipe 4. Moreover, the gland 14 is coupled to the socket 5 with the plurality of T bolts 16 and nuts 17 such that the extended interval region 30 faces the bottom 40 of the groove 39. However, the obstacle is not limited to the bottom 40 of the groove 39.

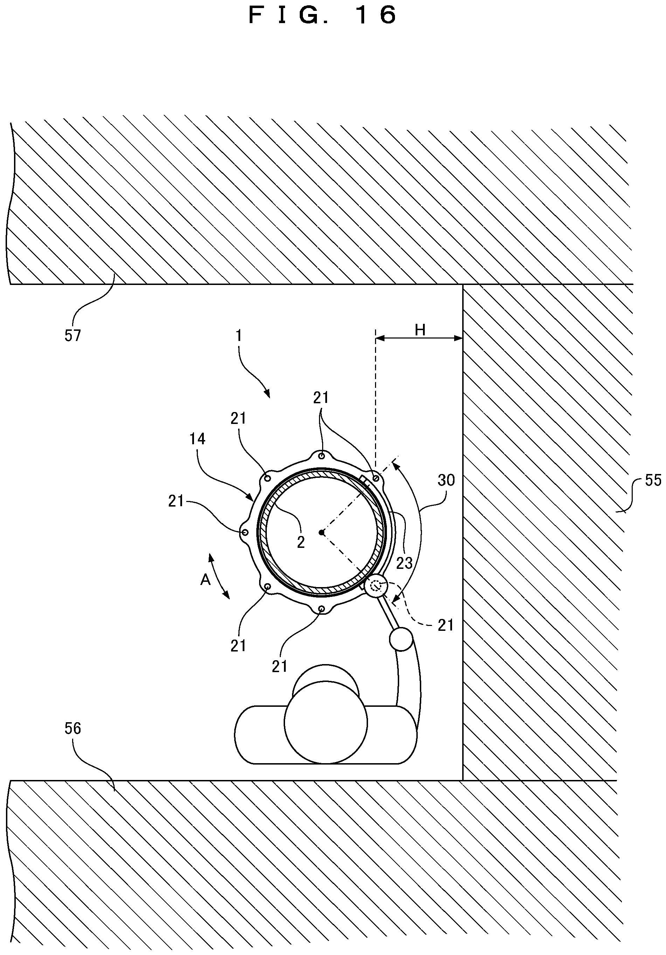

For example, in a third embodiment described below, a first pipe 2 and a second pipe 4 are, for example, vertically provided standpipes as illustrated in FIG. 16 and are surrounded by building walls 55 to 57 on three sides. In this case, the wall 55 closest to the first pipe 2 and the second pipe 4 serves as an obstacle that interferes with a joining operation of the first pipe 2 and the second pipe 4. Moreover, a gland 14 is coupled to a socket 5 with a plurality of T bolts 16 and nuts 17 such that an extended interval region 30 faces the wall 55.

With this configuration, when the first pipe 2 and the second pipe 4 are joined to each other, the extended interval region 30 of the gland 14 faces the wall 55. Thus, two bolt insertion holes 21 of the extended interval region 30 are located at positions separated from a position closest to the wall 55 in a circumferential direction A of the gland 14. Thus, a distance H between the bolt insertion holes 21 of the extended interval region 30 and the wall 55 is larger than a distance between the bolt insertion hole of the gland and the wall if the gland only has an equal interval region 29 without the extended interval region 30. This can improve workability even if the first pipe 2 and the second pipe 4 are joined to each other in a small work area.

### (Fourth Embodiment)

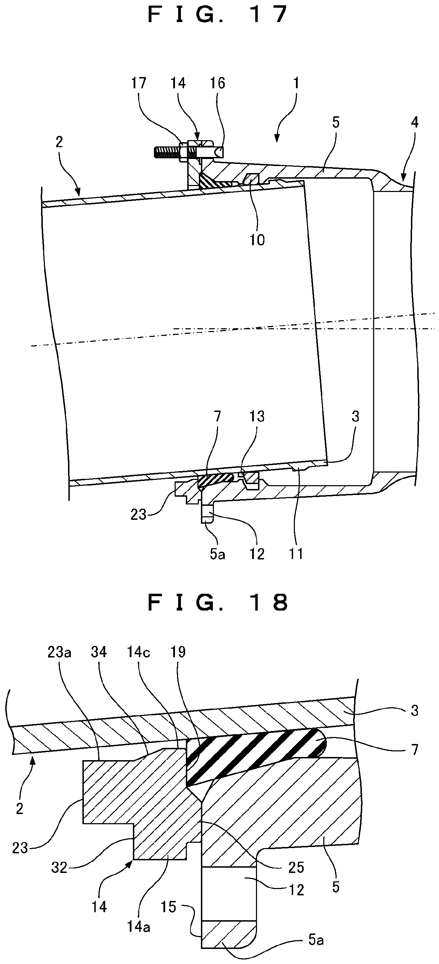

In the first embodiment, when the first pipe 2 and the second pipe 4 are joined to each other as illustrated in FIG. 1, the T bolts 16 are inserted into the bolt holes 12 of the socket 5 and the bolt insertion holes 21 of the gland 14 with the spigot 3 kept in line with the socket 5, and then the nuts 17 are tightened, so that the gland 14 in an upright position is coupled to the socket 5. However, the present invention is not limited to the joining method. For example, in a fourth embodiment described below, a spigot 3 is inserted into a socket 5, and then the spigot 3 is diagonally deflected relative to the socket 5 as illustrated in FIGS. 17 and 18. In this state, a gland 14 may be coupled to the socket 5 by inserting T bolts 16 into bolt holes 12 of the socket 5 and bolt insertion holes 21 of a gland 14 and tightening nuts 17.

In the fourth embodiment, as illustrated in FIG. 18, the gland 14 with a tapering portion 34 is used. A gland 14 with a step portion 50 (see FIG. 15) may be used instead.

In the first to fourth embodiments, as illustrated in FIGS. 3 and 4, the seven bolt insertion holes 21 are formed on the gland 14. The number of bolt insertion holes 21 is not limited to seven and may be determined by, for example, subtracting 1 from a multiple of 4 (11 or 15).

As illustrated in FIG. 4, in the first to fourth embodiments, the both end portions 23b of the reinforcing member 23 extend beyond the two straight lines 36 from the inside of the extended interval region 30 and are located in the equal interval region 29. However, the both end portions 23b of the reinforcing member 23 may be formed between the two straight lines 36 without extending beyond the two straight lines 36.

The gland 14 has the tapering portion 34 in the first embodiment as illustrated in FIG. 1, and the gland 14 has the step portion 50 in the second embodiment as illustrated in FIG. 15. The inner circumference 14c of the gland 14 and the inner circumference 23a of the reinforcing member 23 may have the same diameter without forming the tapering portion 34 or the step portion 50, and the inner circumference 14c of the gland 14 and the inner circumference 23a of the reinforcing member 23 may be flush with each other. However, the formation of the tapering portion 34 or the step portion 50 can advantageously increase an angle of deflection α (see FIG. 11) between the first pipe 2 and the second pipe 4 and a tilt angle β (see FIG. 13) of the gland 14 as compared with the case where the tapering portion 34 or the step portion 50 is not formed.

## Claims

1. A gland provided for a pipe joint in which a spigot is inserted into a socket, and
a seal member is inserted between an outer circumference of the spigot and an inner circumference of the socket,
wherein the gland is fit onto the spigot so as to face an opening end face of the socket from outside and is coupled to the socket with a plurality of fasteners so as to press the seal member into the socket,
the gland has a pressing face for pressing the seal member, a plurality of fastener insertion holes where the fasteners are inserted, an equal interval region in which intervals between the fastener insertion holes in a circumferential direction are kept at equal intervals, and an extended interval region in which an interval between any adjacent two of the fastener insertion holes is larger than the equal intervals, and
the extended interval region includes a reinforcing member.

2. The gland according to claim 1, wherein the extended interval region faces an obstacle that interferes with a joining operation for the pipes to each other.

3. The gland according to claim 1 or 2, wherein the reinforcing member is provided on a side opposite to the pressing face, protrudes from the side opposite to the pressing face in a separating direction that separates the spigot from the socket, and is located outside an inner circumference of the gland in a radial direction, and
a step portion is formed between the inner circumference of the gland and an inner circumference of the reinforcing member.

4. The gland according to claim 1 or 2, wherein the reinforcing member is provided on a side opposite to the pressing face, protrudes from the side opposite to the pressing face in a separating direction that separates the spigot from the socket, and is located outside an inner circumference of the gland in a radial direction, and
a tapering portion is formed between the inner circumference of the gland and an inner circumference of the reinforcing member, and
the tapering portion tilts outward in the radial direction as the tapering portion extends in the separating direction that separates the spigot from the socket.

5. The gland according to claim 1, wherein the reinforcing member is provided between the two adjacent fastener insertion holes in the extended interval region.

6. A pipe joint comprising the gland according to claim 1, wherein a spigot is inserted into a socket,
a seal member is inserted between the outer circumference of the spigot and the inner circumference of the socket,
the gland is fit onto the spigot so as to face the opening end face of the socket from the outside and is coupled to the socket with the plurality of fasteners while the extended interval region faces an obstacle that interferes with a joining operation of the pipes,
the gland has a pressing surface in contact with the seal member, and
the fasteners are inserted into the fastener insertion holes of the gland.

7. A method for joining pipes using the gland according to claim 1, wherein the spigot is inserted into the socket, and the gland is coupled to the socket and the seal member is inserted between the outer circumference of the spigot and the inner circumference of the socket by inserting the fasteners into the fastener insertion holes of the gland and tightening the fasteners in a state in which the extended interval region of the gland faces an obstacle that interferes with a joining operation of the pipes.

8. The method for joining pipes according to claim 7, wherein the spigot is inserted into the socket, and the gland is coupled to the socket by inserting the fasteners into the fastener insertion holes of the gland and tightening the fasteners in a state in which the spigot is diagonally deflected relative to the socket.
